# EUROPÄISCHE PATENTANMELDUNG

(11) **EP 1 967 278 A1**
(43) Veröffentlichungstag der Anmeldung: **10.09.2008**
(21) Anmeldenummer: 07004498.7
(22) Anmeldetag: 06.03.2007
(51) Int. Cl.: B04B 1/00, B04B 5/10, B04B 9/06

(54) **Mehrstufige Zentrifuge mit Energie-Rückgewinnung zur Entsalzung von Meerwasser**

(71) Anmelder: Weidner, Herbert, 63864 Glattbach (DE)
(72) Erfinder: Weidner, Herbert, 63864 Glattbach (DE)

(57) **Zusammenfassung**

1. Vorrichtung und Verfahren wahlweise zur Entsalzung von Meerwasser oder zur Erhöhung des Salzgehaltes. Das Prinzip eignet sich auch für beliebige Lösungen.
2.1. Entsalzungsanlagen arbeiten bisher entweder nach dem Destillationsverfahren oder mit Umkehrosmose. Beide Verfahren erfordern sehr viel Energie und entziehen dem Wasser alle Mineralien. Die Zentrifuge benötigt nur einen Bruchteil dieser Energie bei verringertem Wartungsaufwand.
2.2. Das Salzwasser wird in einer Zentrifuge, die aus mehreren Einzelkammern besteht, in salzarmes und salzreiches Wasser getrennt. Die entstehenden Teilmengen werden in benachbarte Einzelkammern transportiert und dort erneut zentrifugiert und getrennt. Geeignetes Kombinieren der Teilmengen und Ausnützen der Bewegungsenergie des Wassers spart Beschleunigungsenergie. Das aus der Zentrifuge austretende Wasser treibt eine Turbine an, um Energie zurückzugewinnen. Die Zentrifuge besitzt keine engen Durchlässe oder Membranen, die sich zusetzen können und aufwendig gereinigt werden müssen. Es werden keine Chemikalien benötigt, um einen störungsfreien Betrieb sicherzustellen.
2.3. Die mehrstufige Zentrifuge besitzt eine Zuführung und zwei Auslässe für Wasser. Je nach Position der Wasserzuführung kann man entweder vorzugsweise Wasser entsalzen oder den Salzgehalt steigern.

## Beschreibung

Technischer Stand: Zur Zeit beschränkt sich die großtechnische Herstellung von Süßwasser aus Meerwasser auf zwei konkurrierende Verfahren:
a) Bei der Destillation von Salzwasser findet man im Dampf vorzugsweise H2O-Moleküle mit geringen Beimengungen schwerer Moleküle wie NaCl. Das Sieden kostet so viel Energie, dass dieses Verfahren nur dort angewendet wird, wo billiges Öl oder Gas als Heizmittel vorhanden sind. Der Einsatz von solarer Wärme ist keine wirtschaftliche Lösung, da wegen der geringen Energiedichte des Sonnenlichtes sehr große Kollektorflächen erforderlich sind und der Durchsatz (gewonnenes Süßwasser pro Quadratmeter Anlagenfläche) sehr gering ist. In jedem Fall begünstigt die hohe Verfahrenstemperatur die Korrosion der Geräte.
b) Bei der Umkehrosmose wird Salzwasser unter hohem Druck durch sehr feinporige Filter gepresst, wobei vorzugsweise die kleinen H2O-Moleküle (also Süßwasser) das Filter passieren. Dieses Verfahren benötigt sehr viel Antriebsenergie bei der Druckerzeugung, die kaum wiedergewonnen werden kann. Dieses Verfahren leidet auch darunter, dass die Filter sehr schnell verschlammen (Fouling) und dann immer weniger Wasser durchtreten kann. Das bedeutet große Wartungskosten und/oder Einsatz von Chemikalien, die nichts im Trinkwasser zu suchen haben.

Beide Verfahren haben den Nachteil, dass das erhaltene Wasser praktisch reines destilliertes Wasser ohne Mineralien ist. Das Zentrifugieren entfernt dagegen nicht vollständig die im Meerwasser gelösten Mineralien und besitzt deshalb nicht die Hauptprobleme von Verdampfungs- und Umkehrosmoseverfahren: Wasser, das überhaupt kein Calcium oder Magnesium aufweist, ist aggressiv gegenüber allen Metallgegenständen, mit denen es in Kontakt kommt. Außerdem ist destilliertes Wasser geschmacklos und kann nicht über einen längeren Zeitraum als Trinkwasser verwendet werden, da ihm lebenswichtige Mineralien fehlen. Diese Minerale müssen dem gewonnenen Wasser nachträglich wieder zugesetzt werden. In beiden beschriebenen Verfahren finden sich die lebenswichtigen Mineralien, die im Meerwasser vorhanden waren, in der Sole, die ein Nebenprodukt des Verfahrens ist. Ein wichtiger Kostenpunkt bei der Erzeugung von Wasser mit jedem dieser Anlagetypen sind daher die Kosten für die Mineralien, die dem Wasser zurückgegeben werden müssen, und für die Ausrüstung, die für diesen Zweck erforderlich ist.

Bei beiden Verfahren ist der Herstellungsaufwand pro Liter Brauchwasser so groß, dass die Erzeugung großer Mengen für Bewässerung von landwirtschaftlichen Flächen nirgends durchgeführt wird. Ziel des Zentrifugenverfahrens ist es, die Betriebskosten und den Wartungsaufwand im Vergleich zu den oben beschriebenen Verfahren deutlich zu reduzieren.

Physikalischer Hintergrund: Ein Wasser-Molekül (H2O) hat (16 + 1 + 1) atomare Masseneinheiten und besitzt somit etwa ein Drittel der Masse eines Kochsalz-Moleküls (NaCl) mit (35,5 + 23) Masseneinheiten. Weitere im Meerwasser enthaltene Moleküle sind ebenfalls deutlich schwerer als H2O. Deshalb lässt sich der Salzgehalt von Wasser durch Zentrifugieren ändern: Die achsennahen Flüssigkeitsanteile werden geringeren Salzgehalt besitzen, die achsenfernen Flüssigkeitsschichten am Trommelrand werden wegen des Massenunterschiedes der Moleküle höheren Salzgehalt aufweisen und können getrennt entnommen werden. Der Konzentrationsunterschied hängt wesentlich von der Drehzahl der Zentrifugiertrommel ab und ist proportional zum Quadrat der Umfangsgeschwindigkeit. Diese kann mit Rücksicht auf die Materialfestigkeit aber nicht beliebig gesteigert werden und deshalb wird der Entmischungsgrad pro Trommel nur einige Prozent betragen. In diesem Patent wird vorgeschlagen, einige Trommeln zu "stapeln", das heißt nebeneinander längs einer virtuellen Achse anzuordnen und nach einem festen Programm mit Salzwasser unterschiedlicher Konzentration aus den Nachbartrommeln versorgt. Dazu kann zwischen den Trommeln gezielt - sowohl achsennah als auch achsenfern über steuerbare Durchlässe bzw. Überläufe - Wasser ausgetauscht werden. Dieser Austausch wird hervorgerufen und unterstützt durch geeignete Bewegungen der Trennwände zwischen den Trommeln oder durch andere Vorrichtungen wie Kolben.

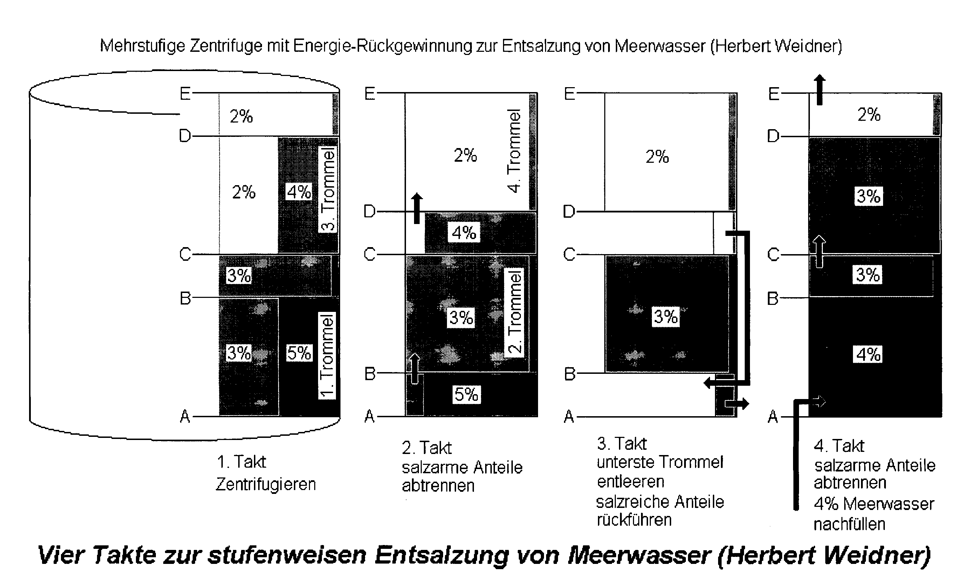

Nachfolgend werden anhand der beigefügten Zeichnung die Takte beschrieben, nach deren Vorgabe der Flüssigkeitsaustausch erfolgen soll. Vereinfachend sei angenommen, dass die Trennwände A, C und E fest und die Trennwände B und D achsenparallel (in der Zeichnung: in vertikaler Richtung) verschiebbar sind. Die Drehachse ist vertikal und befindet sich etwa dort, wo die Buchstabenreihe A, B.. E steht. Die angegebenen Prozentwerte müssen nicht so vorkommen, sie sollen nur beispielhaft und zum leichteren

Verständnis den ungefähren Salzgehalt des Wassers angeben. In Wirklichkeit werden auch keine scharfen Grenzen der Salzkonzentrationen auftreten, sie werden in der Zeichnung nur dargestellt, um die Transportvorgänge darzustellen. Ebenso wird eine großtechnische Zentrifuge nicht nur aus den vier dargestellten Trommeln bestehen.
1. Takt: Alle Trommeln sind mit Flüssigkeit gefüllt und drehen sich um die Achse. Die beweglichen Trennwände B und D sind so positioniert, dass das Volumen zwischen A und B (1. Trommel) größer ist als das Volumen zwischen B und C (2. Trommel). Entsprechend ist das Volumen der 3. Trommel größer als das der 4. Trommel. Die untere Kammer zwischen A und B enthält Meerwasser mit 4% mittlerem Salzgehalt. Durch die Zentrifugalkraft steigt dieser in der Nähe des Trommelumfangs auf etwa 5%, während er in der Nähe der Drehachse auf etwa 3% sinken wird. Vergleichbares gilt für die Trommel zwischen C und D, diese enthält aber (in diesem Beispiel) als Folge des vorhergehenden Taktes Wasser mit nur 3% mittlerem Salzgehalt. Auch hier erzeugt die Zentrifugalkraft einen Konzentrationsunterschied zwischen achsennahen und achsenfernen Schichten, beispielhaft wird 2% und 4% angenommen.
2. Takt: Die Trennwände B und D werden achsenparallel nach unten verschoben, gleichzeitig werden achsennahe Ventile in diesen Trennwänden geöffnet. Dadurch wird unten salzarmes Wasser aus der 1. in die 2. Trommel verdrängt, oben aus der 3. in die 4. Trommel. Die Ventile werden anschließend wieder geschlossen. Falls anstelle der Ventile Überläufe verwendet werden, genügt der ansteigende Wasserspiegel beim Verschieben der Trennwände, um den Übertritt in die jeweilige Nachbartrommel zu bewirken. Sobald die Trennwände nicht mehr bewegt werden, endet auch der Flüssigkeitstransport.
3. Takt: Die 1. (unterste) Trommel, die nun überwiegend angereichertes Salzwasser enthält, wird durch steuerbare Öffnungen an der Außenseite entleert. Das Wasser verlässt die Zentrifuge tangential mit hoher Geschwindigkeit, die Energie wird (gemäß Anspruch 7) in einer umgebenden Turbine ausgenutzt. Anschließend wird diese 1. Trommel mit dem etwas weniger salzhaltigem Wasser aus der 3. Trommel gefüllt. Um einen vollständigen Transport sicherzustellen, kann man das Volumen der 3. Trommel verringern, indem man den Abstand zwischen den Trennwänden C und D verkleinert. Wenn weitere Trommeln folgen, muss nun der Durchlass zwischen 3. und 1. Trommel geschlossen und das ursprüngliche Volumen der 3. Trommel wieder hergestellt werden. Dann kann auf gleiche Weise der Inhalt der 5. Trommel in die 3. Trommel verschoben werden usw...
4. Takt: Die Trennwände B und D werden achsenparallel nach oben geschoben, gleichzeitig öffnen achsennahe Ventile in den Trennwänden C und E. Dadurch wird salzarmes Wasser aus der 2. in die 3. Trommel geschoben und mit dem darin enthaltenen Restwasser verwirbelt. Gleichzeitig wird das salzarme Wasser aus der 4. Trommel in die 5. Trommel geschoben, sofern diese folgt. Oder das Wasser verlässt die Zentrifuge, falls nach ausreichend vielen Trommeln der Salzgehalt auf den gewünschten Wert gesunken ist.

In die 1. Trommel wird Meerwasser nachgefüllt und Ausgleichsventile zwischen den Trommeln werden geöffnet, damit alle Trommeln etwa gleichen Wasserstand aufweisen. Nun ist die Ausgangsposition wieder erreicht, es folgt der 1. Takt.

Um die Verarbeitungsgeschwindigkeit des Salzwassers zu steigern, können bei langen Zentrifugen mit vielen Trommeln der 3. und 4. Takt überlappend gestaltet werden: Während beispielsweise das Wasser von der 9. zur 7. Trommel geschoben wird, kann am anderen Ende der Zentrifuge die 1. Trommel bereits wieder mit neuem Salzwasser gefüllt werden.

Zusammenfassung der Takte: Im 2. und 4. Takt wird Wasser achsenparallel und achsennah "nach oben" transportiert, wobei der Salzgehalt von Trommel zu Trommel geringer wird. Bei genügend großer Anzahl von solchen hintereinander geschalteten Trommeln kann der Salzgehalt des Wassers stufenweise beliebig verringert werden. Im 3. Takt wird Wasser achsenparallel und achsenfern "nach unten" transportiert, wobei es von Trommel zu Trommel salzhaltiger wird.

Der Zentrifuge muss immer wieder Meerwasser (Salzgehalt etwa 4%) nachgeliefert werden. Das kann, muss aber nicht bei der "untersten" 1. Trommel geschehen. Es kann den Gesamtwirkungsgrad bei Entsalzung vergrößern, wenn diese Einspeisung bei einer "höheren" Trommel, z.B. der 3. Trommel vorgenommen wird. Dann wird der mittlere Salzgehalt dieser 3. Trommel etwa 4% betragen. Der Salzgehalt "unterer" Trommeln (in Richtung 1. Trommel) wird dann größer als 4% sein. Der Salzgehalt "oberer" Trommeln wird geringer als 4% sein und gegen Null streben. Auf diese Weise kann die Verweildauer des Meerwassers in der Zentrifuge verlängert werden und es muss weniger "Frischwasser" auf die Umfangsgeschwindigkeit der Zentrifuge beschleunigt werden. Das reduziert den Energiebedarf der Zentrifuge.

Die Zentrifuge kann auch eingesetzt werden, um den Anteil eines gelösten Stoffes zu vergrößern (Anspruch 9). Diese Konzentrationssteigerung kann in der chemischen Industrie wertvoll sein, da sie nicht mit einer Änderung der Temperatur einhergeht und auch keine zusätzlichen Chemikalien erfordert. Dazu muss die Flüssigkeit nicht bei der 1. Trommel, sondern - je nach Anzahl der Kammern - beispielsweise der 7. oder 9. Trommel zugeführt werden. Das Konzentrat kann dann am Auslass der 1. Trommel entnommen werden.

### Energie-Rückgewinnung

Wenn das mit Salz angereicherte Wasser (Sole) die 1. Trommel tangential verlässt, um in das Meer zurückgeführt zu werden, besitzt es eine enorme Geschwindigkeit. Diese wird ausgenutzt, um den Energiebedarf der Gesamtanlage zu verringern. Diejenigen Trommel, bei denen das Wasser die Zentrifuge verlässt (im Regelfall wird es die "unterste" Trommel sein), wird deshalb mit einem Turbinenrad umgeben, das eine gewisse Ähnlichkeit zu einer Freistrahl-Turbine besitzt. Dieses Turbinenrad nach Turgo-Bauart hat die Aufgabe, die mit hoher Geschwindigkeit auftreffenden Wasserspritzer auf möglichst geringe Geschwindigkeit abzubremsen und deren kinetische Energie vollständig auszunutzen. Das gelingt wegen dem Impulssatz besonders gut, wenn dieses Turbinenrad etwa die halbe Drehzahl der Trommel besitzt. Bei Belastung wird dieser Wert leicht unterschritten.

Die Energie, die dem Turbinenrad entnommen werden kann, liegt zwischen 60% und 95% der Energie, die die von 1. Trommel austretende Wassermenge als kinetische Energie besitzt. Benutzt man diese Energie, um beispielweise das Meerwasser zur Zentrifuge oder das in der Zentrifuge erzeugte Süßwasser zum Verbraucher zu pumpen, lässt sich der Energiebedarf der Gesamtanlage merklich reduzieren.

Anlage: Eine Seite mit Zeichnungen.

## Patentansprüche

1. Zentrifuge, deren zylindrischer Innenraum durch kreisförmige Platten in mehrere Einzelkammern (Trommeln) aufgeteilt wird ("Sandwich-Bauweise"). Die Trommeln haben eine gemeinsame (virtuelle) Drehachse, müssen aber keine einheitliche Rotationsfrequenz besitzen.

2. Zentrifuge nach Anspruch 1, bei der das Volumen der Trommeln während des Betriebes geändert werden kann. Diese Volumenänderung kann durch bewegliche Verdränger und/oder durch Verbiegen/Verschieben der Trommelwände erfolgen.

3. Zentrifuge nach Anspruch 1, bei der die Trommelwände radiale Leitbleche besitzen, um das enthaltene Wasser möglichst schnell auf die durch die Trommel vorgegebene Rotationsfrequenz zu beschleunigen.

4. Zentrifuge nach Anspruch 1, bei der zwischen den Trommeln feste und/oder steuerbare Öffnungen und/oder Überläufe existieren, die einen kontrollierten und teilweisen Übertritt des salzhaltigen Wassers in benachbarte Trommeln ermöglichen. Die Steuerung dieser Öffnungen kann wahlweise durch externe Signale und/oder interne (mitrotierende) Sensoren wie Überdruckschalter erfolgen.

5. Zentrifuge nach Anspruch 1, bei der der Transport des Wassers von einer Trommel in eine andere durch überlaufartige Vorrichtungen oder durch "abschälende" Leitbleche (Schaufeln oder Messer) oder durch steuerbare Öffnungen (Ventile) erfolgt. Diese Vorrichtungen rotieren entweder mit gleicher oder unterschiedlicher Drehzahl wie die Zentrifuge oder sie stehen fest. Dabei kann die Menge des transportierten Wassers eingestellt werden, indem man das Niveau dieser Vorrichtungen zur Flüssigkeitsoberfläche variiert.

6. Zentrifuge nach Anspruch 1, bei der eine oder mehrere Trommeln an der Außenwand steuerbare Öffnungen besitzen, durch die das Wasser tangential austreten kann, um eine Turbine (Anspruch 7) anzutreiben.

7. Zentrifuge nach Anspruch 6, die von einem Turbinenrad umgeben ist, das von dem austretenden Wasser angetrieben wird. Dieses Turbinenrad besitzt Schaufeln ähnlich einer Turgoturbine (einschalige Schaufeln), um die Richtung des austretenden Wassers um fast 180 Grad abzulenken und damit dessen Impuls möglichst vollständig zu übernehmen. Zweck des Turbinenrades ist es, möglichst viel von der Rotationsenergie zurückzugewinnen, die in der Zentrifuge nach Anspruch 1 zur Beschleunigung des Wassers aufgewendet wird.

8. Zentrifuge nach Ansprüchen 1 bis 7, bei dem die Zentrifuge eine beliebige Flüssigkeit mit gelösten Stoffen enthält.

9. Zentrifuge nach Ansprüchen 1 bis 8, bei der je nach Position der Flüssigkeitszufuhr die Konzentration der gelösten Stoffe verringert (entsalzen) oder vergrößert werden kann.
